# EUROPÄISCHE PATENTSCHRIFT

(11) **EP 2 052 216 B1**
(45) Veröffentlichungstag und Bekanntmachung des Hinweises auf die Patenterteilung: **27.04.2016**
(21) Anmeldenummer: 07786689.5
(22) Anmeldetag: 16.08.2007
(51) Int. Cl.: G01D 5/347

(54) **OPTOELEKTRONISCHER WINKELSENSOR UND VERFAHREN ZUM BESTIMMEN EINES DREHWINKELS UM EINE ACHSE**
OPTOELECTRONIC ANGLE SENSOR AND METHOD FOR DETERMINING A ROTATION ANGLE AROUND AN AXIS
CAPTEUR ANGULAIRE OPTOÉLECTRONIQUE ET PROCÉDÉ DESTINÉ À LA DÉTERMINATION D'UN ANGLE DE ROTATION AUTOUR D'UN AXE

(30) Priorität: 18.08.2006 EP 06119146
(43) Veröffentlichungstag der Anmeldung: 29.04.2009
(73) Patentinhaber: Leica Geosystems AG, 9435 Heerbrugg (CH)
(72) Erfinder: BRAUNECKER, Bernhard, 9445 Rebstein (CH); KIPFER, Peter, 9437 Marbach (CH); LIPPUNER, Heinz, 9445 Rebstein (CH)
(74) Vertreter: Kaminski Harmann
(86) Internationale Anmeldenummer: PCT/EP2007/007248
(87) Internationale Veröffentlichungsnummer: WO 2008/019855

(56) Entgegenhaltungen:
- EP-A2- 0 854 436
- DE-A1- 3 924 460
- DE-A1- 19 750 474
- US-A- 3 862 428
- US-A1- 2005 072 912

## Beschreibung

Die Erfindung betrifft einen optoelektronischen Winkelsensor nach dem Oberbegriff des Anspruchs 1 sowie ein Verfahren zum Bestimmen eines Drehwinkels um eine Achse nach Anspruch 10.

Wie in vielen anderen Bereichen werden auch im Bereich der optoelektronischen Winkelsensoren immer kleinere Bauformen angestrebt. Übliche optoelektronische Winkelsensoren zum Bestimmen eines Drehwinkels um eine Achse weisen einen Codeträger und einen optischen Detektor auf, die relativ zueinander drehbar sind. Der optische Detektor ist beispielsweise ein Photodetektor, ein CCD-Zeilen-Array oder ein CCD-Flächen-Array. Der Codeträger ist im Allgemeinen als Kreisscheibe oder als Kreisring ausgebildet und trägt entlang seines Umfangs einen optisch erfassbaren Positionscode, von dem ein Ausschnitt auf den Detektor abgebildet wird.

In seinen Abmessungen ist im Allgemeinen der Detektor wesentlich kleiner als der Codeträger. Zur Miniaturisierung des Winkelsensors ist daher in erster Linie eine Verkleinerung des Codeträgers erforderlich. Mit einem Codeträger mit verringertem Durchmesser kann das Verhältnis von Detektor-Fläche zu Codeträger-Fläche erhöht und so ein grösserer Bereich des auf dem Codeträger aufgebrachten Codes erfasst werden. Zusätzlich ist für einen Winkelsensor mit dem Codeträger als drehender Komponente und dem Detektor als feststehender Komponente eine höhere Betriebsstabilität erreichbar, da sich die auf den Codeträger wirkenden Zentrifugalkräfte verringern. Im Allgemeinen dreht sich der Codeträger des Winkelsensors. Es ist jedoch ebenso möglich, den Codeträger feststehend und den Detektor drehend auszubilden.

Bei der Miniaturisierung des Winkelsensors stellt sich nun das Problem, dass eine Verkleinerung der Codeträger-Fläche auch eine Verkleinerung und/oder Verfeinerung der Code-Strukturen erfordert. Die Codierung kann jedoch insofern nicht beliebig verfeinert werden, als mit immer feineren Strukturen immer grössere Beugungseffekte auftreten und die Strukturen nicht mehr mit der erforderlichen Genauigkeit aufgelöst werden können. Die Winkelauflösung wird durch die Auflösung der Codierung mittels des Detektors bestimmt und hängt damit vom Auflösevermögen des Detektors ab. Dieses ist jedoch beschränkt, da eine Verkleinerung der Pixelgrösse durch das Signal-zu-Rausch-Verhältnis limitiert ist. Alternativ ist eine höhere Winkelauflösung durch Vergrösserung des Durchmessers des Codeträgers erreichbar, was jedoch im Widerspruch zu allen Miniaturisierungsbestrebungen steht.

Im Stand der Technik werden Winkelsensor-Bauformen verkleinert, indem optische oder mechanische Komponenten reduziert werden. Es ist jedoch keine Lösung bekannt, einen Winkelsensor mittels Verkleinerung seiner codetragenden Fläche zu miniaturisieren, ohne an Winkelauflösung und damit Messgenauigkeit zu verlieren bzw. die Winkelauflösung bei gleichbleibender Grösse des Codeträgers zu erhöhen.

Die DE 197 50 474 A1 beschreibt eine Reduktion des Durchmessers einer Teilscheibe eines Winkelsensors, indem die Teilscheibe in die Achse der rotierenden Welle direkt eingesetzt wird. Damit kann der Durchmesser der Teilscheibe um eine äussere Einfassung, wie einen Metallring, derselben verringert werden.

Diese mechanische Lösung ermöglicht jedoch lediglich die Verkleinerung der Teilscheibe um die äussere Einfassung und bietet daher nur Spielraum für eine Verkleinerung des Winkelsensors im Bereich einiger Prozent. Sie stellt keine Möglichkeit bereit, den Durchmesser der codetragenden Fläche des Sensors wesentlich, beispielsweise um 80%, zu reduzieren und den Winkelsensor damit zu miniaturisieren.

Das Dokument DE 3924360 offenbart einen Drehwinkelsensor gemäß den Stand der Technik.

Es ist eine Aufgabe der Erfindung, einen optoelektronischen Winkelsensor bereitzustellen, mit welchem Winkelsensor auch mit einem im Durchmesser reduzierten Codeträger eine genaue Bestimmung des Drehwinkels möglich ist.

Eine weitere Aufgabe der Erfindung ist die Bereitstellung eines in Bezug auf die Genauigkeit der Winkelbestimmung verbesserten optoelektronischen Winkelsensors.

Ebenfalls eine Aufgabe der Erfindung ist es, einen hinsichtlich der Flächennutzung des Codeträgers verbesserten optoelektronischen Winkelsensor bereitzustellen.

Eine weitere Aufgabe ist es, ein Verfahren zur Bestimmung eines Drehwinkels bereitzustellen, welches die Drehwinkelbestimmung mit einem Codeträger mit reduziertem Durchmesser ermöglicht.

Eine weitere Aufgabe ist die Bereitstellung eines Verfahrens zur Bestimmung eines Drehwinkels mit verbesserter Genauigkeit.

Diese Aufgaben werden durch die Gegenstände der Ansprüche 1, 10 oder der abhängigen Ansprüche gelöst bzw. die Lösungen weitergebildet.

Die Erfindung beruht darauf, dass die Codierung der Kreisscheibe eines erfindungsgemässen optoelektronischen Winkelsensors weitgehend vollständig als Bild erfasst und die erfassten Bilder - respektive die Detektor-Messsignale - als Realisationen eines statistischen Parameters interpretiert werden. Zur Auswertung der Messsignale wird aus einer konstruierten Verteilung von Parameterwerten der die Messsignale charakterisierende Parameterwert ermittelt.

Hierzu wird mittels einer Einrichtung des Winkelsensors ein weitgehend vollständiges, insbesondere gesamthaftes, auswertbares Bild der Codierung der Kreisscheibe auf dem Detektor des Winkelsensors erzeugt. Beispielsweise werden 90% der Codierung als Bild erfasst. Das Bild beinhaltet eine Information über die Relativposition von Kreisscheibe und Detektor, die relativ zueinander bewegbar sind. Die Relativbewegung umfasst zumindest eine Relativ-Drehbewegung um eine Achse. Zusätzlich können Kreisscheibe und Detektor auch - äusserst kleine - translatorische Relativbewegungen und/oder Taumelbewegungen, die z.B. aus Montage- und/oder Fertigungsungenauigkeiten resultieren, ausführen.

Unter auswertbarem Bild ist in diesem Zusammenhang ein Bild, aus welchem die Information über die Relativposition ermittelt werden kann, zu verstehen. Das Bild muss dabei nicht notwendigerweise eine scharfe Abbildung der Codierung darstellen. Im Rahmen der Beschreibung der Erfindung werden für das auswertbare Bild auch die Begriffe Abbildung, Projektion, Messsignale oder Messmuster verwendet.

Die Codierung der Kreisscheibe eines erfindungsgemässen Winkelsensors ist derart ausgeführt, dass im Wesentlichen die gesamte Fläche der Scheibe genutzt wird. Dies wird realisiert, indem der weitgehend gesamte Flächenbereich der Scheibe mit Code versehen wird. Insbesondere weist die auf die Kreisscheibe aufgebrachte Codierung einen Code auf, der sich sowohl in azimutaler als auch radialer Richtung erstreckt und sich in beiden Richtungen winkelabhängig verändert. Z. B. wird ein üblicher Code, der auf einer üblichen Kreisscheibe im äusserem Bereich der Kreisscheibe entlang deren Umfangs aufgebracht ist und sich in Umfangsrichtung winkelabhängig verändert, sowohl in Umfangsrichtung als auch quer dazu auf die Kreisscheibe des erfindungsgemässen Winkelsensors aufgebracht, beispielsweise mäanderförmig - der Code wird sozusagen auf die Scheibe "gefaltet". Damit trägt der Code entgegen dem üblichen Code zusätzlich auch in radialer Richtung winkelabhängige Code-Information.

Der Informationsgehalt der Codierung wird durch die Anzahl der Übergänge - auch als "Nervosität" des Codes bezeichnet - bestimmt. Die Übergänge werden durch die Wechsel der Eigenschaften der Codeelemente, wie LichtDurchlässigkeit/Licht-Undurchlässigkeit oder Reflexion/ Absorption, erzeugt. Durch die weitgehend vollflächige Aufbringung der Codierung und damit Nutzung im Wesentlichen der gesamten Fläche der Kreisscheibe wird eine maximierte Zahl von Übergängen erhalten.

Die solcherart codierte Kreisscheibe entspricht sozusagen einer "codierten Achse". Anhand dieser Codierung ist auch auf eine im Durchmesser verkleinerte Kreisscheibe eine grosse Anzahl von Übergängen zur gattungsgemäss genauen Winkelbestimmung aufbringbar. Mit einer räumlich verdichteten Aufbringung der Codierung kann der Durchmesser der Kreisscheibe wesentlich, beispielsweise um über 90% gegenüber üblichen in Theodoliten eingesetzten Glas- oder Kunststoff-Kreisscheiben mit einem Durchmesser von ca. 78 mm, verringert werden. Beispielsweise ist die Kreisscheibe als "Minischeibe" mit einem Durchmesser zwischen 6 mm und 10 mm ausführbar. Eine solche Verkleinerung der Kreisscheibe ermöglicht eine starke Reduzierung der Abmessungen des Winkelsensors als Ganzes und damit die Realisierung eines miniaturisierten Winkelsensors.

Wird die Kreisscheibe bzw. der Winkelsensor nicht verkleinert, so kann mit einer entsprechenden Ausbildung der Kreisscheibe ein Winkelsensor zur Winkelbestimmung mit verbesserter Genauigkeit verwirklicht werden.

In einer Weiterbildung der Erfindung umfasst die Codierung der Kreisscheibe mehrere Teilcodes. Der vorgängig erwähnte, azimutal und radial ausgedehnte Code kann z.B. einen Teilcode bilden. Zusätzlich kann ein Teilcode als entlang des Umfangs, z.B. im äusseren Bereich der Kreisscheibe, aufgebrachter Absolutcode vorgesehen sein, dessen Erfassung einen Grobwert des Drehwinkels liefert, der eine Verbesserung der Drehwinkel-Bestimmung in Bezug auf die Geschwindigkeit des Auswertealgorithmus ermöglicht.

Ein weiterer Teilcode kann als zusätzlicher Code zur Erfassung translatorischer Bewegungen der Kreisscheibe ausgebildet sein, beispielsweise als azimutal erstreckter Radialcode, wie in Form konzentrischer Kreise um den Mittelpunkt der Kreisscheibe, also im inneren Bereich derselben. Durch Auslesen einzelner Detektor-Zeilen in azimutaler und radialer Richtung, ist aus dem Bild des Radialcodes eine schnelle absolute Achstaumelbestimmung möglich. Indem der Teilcode für translatorische Bewegungen in einem inneren Segment der Kreisscheibe aufgebracht ist, wird auch diese innere Fläche, die für die Bestimmung des Drehwinkels wenig geeignet ist, sinnvoll genutzt.

Um von der Codierung das Bild zu erzeugen, ist eine Einrichtung zum Abbilden respektive Projizieren der Codierung auf den Detektor des Winkelsensors vorgesehen. Die Einrichtung, die Kreisscheibe und der Detektor des erfindungsgemässen Winkelsensors sind derart ausgebildet und angeordnet, dass die Codierung weitgehend vollständig, insbesondere gesamthaft, auf den Detektor abgebildet wird. Vorzugsweise wird ein Bild respektive Messmuster erstellt, welches wenigstens 50%, insbesondere mehr als 75% und vorteilhaft 100% der Codierung aufweist.

Die weitgehend vollständige Erfassung mit zur Auswertung ausreichender Auflösung der Codierung kann anhand eines entsprechenden Beleuchtungskonzepts, einer verkleinerten Kreisscheibe, der Ausbildung und Anordnung von Einrichtung, Kreisscheibe und Detektor bzw. anhand einer Kombination des genannten verwirklicht werden.

Zum Erzeugen des Bildes umfasst die Einrichtung eine Strahlungsquelle, wie eine oder mehrere Photodioden zum Beleuchten der Kreisscheibe. Je nach Ausbildung der Codierung - z.B. mit lichtdurchlässigen und lichtundurchlässigen oder durch unterschiedliches Reflexionsvermögen unterscheidbaren Code-Elementen - erfolgt die Bilderzeugung in Durchlicht oder Auflicht. Beim Durchlicht-Verfahren empfängt der Detektor die durchgelassene, durch die Code-Elemente modulierte Strahlung, beim Auflicht-Verfahren die reflektierte, durch die Code-Elemente modulierte Strahlung.

Eine möglichst homogene Ausleuchtung der Kreisscheibe bzw. eines Kreisscheiben-Bereichs ist durch Strahl-Aufweitung mittels einer entsprechenden Optik, die beispielsweise durch einen Umlenkspiegel oder ein streuendes Medium gebildet sein kann, realisierbar. Die Einrichtung ist insbesondere zum Projizieren eines Bereichs der Kreisscheibe, der dem Bereich der Detektorelemente entspricht, ausgelegt. Gegebenenfalls kann die Einrichtung auch einen selbstleuchtenden Code, z.B. mit organischen Leuchtdioden, darstellen.

Die Kreisscheibe kann - wie vorgängig erwähnt - vorteilhaft verkleinert werden. Dies ermöglicht eine - wirtschaftliche - Ausführungsform eines erfindungsgemässen Winkelsensors mit einem Detektor, dessen Fläche im Wesentlichen der Fläche der Kreisscheibe entspricht. Insbesondere ist ein Detektor einsetzbar, dessen Längen- und Breitenabmessungen dem Durchmesser der Kreisscheibe entsprechen. Eine solche Ausführungsform, in welcher die codetragende Kreisscheibe und der Detektor weitgehend gleich dimensioniert sind, ermöglicht auf einfache Art und Weise die Erfassung der im Wesentlichen gesamten Kreisscheiben-Fläche respektive der darauf aufgebrachten Codierung auf dem Detektor. Zusätzlich kann damit vorteilhaft eine Beabstandung des Kreisscheiben-Zentrums von der Drehachse - eine Exzentrizität festgestellt werden. In einer Ausführungsform der Erfindung sind die Kreisscheibe und der Detektor weitgehend deckungsgleich und koaxial zentriert angeordnet.

Der Detektor stellt einen, z.B. durch Anordnungen von CCD-Zeilen-Arrays und CCD-Spalten-Arrays gebildeten, flächigen photosensitiven Detektor dar. Eine matrizenförmige Anordnung photosensitiver Bereiche ist mit einem CCD-Flächensensor oder CMOS-Flächensensor realisierbar. Ebenso können alternative übliche Sensoren eingesetzt werden.

Das Bild respektive die Messsignale des Detektors beinhalten Informationen über die Relativposition von Kreisscheibe und Detektor, welche Informationen durch einen Vergleich mit einem elektronischen Referenzmuster unter Anwendung eines parametervariierenden Vergleichsverfahrens ausgewertet werden. Anhand dieser Auswertung können auch sehr kleine und feine Code-Strukturen noch mit hoher Genauigkeit aufgelöst und der Drehwinkel genau bestimmt werden.

Das elektronische Referenzmuster wird mittels einer Speicher- und Auswertekomponente des erfindungsgemässen Winkelsensors bereitgestellt. Die Speicher- und Auswertekomponente ist weiters zum Auswerten der Detektor-Messsignale anhand des erwähnten Auswerteverfahrens ausgebildet. Dazu weist die Speicher- und Auswertekomponente ein Computerprogrammprodukt auf, welches Programmcode enthält, der so angepasst ist, dass er das Verfahren ausführt, wenn er auf der Komponente abläuft. Zum Auswerten der Bildinformation, die z.B. als elektrische digitale Detektor-Signale vorliegt, insbesondere zum numerischen Bearbeiten einer grossen Datenmenge, wie z.B. der Datenmenge eines 1000 x 1000 CMOS-Pixelsensors, ist die Speicher- und Auswertekomponente z.B. als Mikroprozessor ausgebildet. Auch ein FPGA (field-programmable gate array) oder ein ASIC (Application Specific Integrated Circuit) ist als Speicher- und Auswertekomponente geeignet.

Das Referenzmuster ist als statistische Verteilung für eine unbekannte charakteristische Grösse der Winkelbestimmung respektive der Detektor-Messsignale modellierbar. Beispielsweise stellt das Referenzmuster eine Schätzfunktion der Grösse dar. Die charakteristische Grösse kann der Drehwinkel sein. Die unbekannte Grösse des statistischen Modells ist anhand statistischer Methoden, wie Schätzmethoden, ermittelbar.

Das Referenzmuster kann auch durch einen Algorithmus, der das Messmuster respektive das Bild respektive die Detektor-Messsignale und/oder die Codierung simuliert oder dupliziert, gebildet sein. Z. B. werden für eine möglichst realistische Beschreibung des Messmusters die Codestruktur, die Abbildungsparameter der Einrichtung und des Detektors, sowie Abbildungsfehler berücksichtigt.

In einer Ausführungsform der Erfindung wird als stochastische Vergleichsmethode zum Auswerten des Messmusters die Maximum-Likelihood-Methode angewandt. Das erfindungsgemässe Verfahren weist dann z.B. die folgenden Schritte auf:
o Erzeugen eines Messmusters,
o Erzeugen eines das Messmuster möglichst realistisch beschreibenden Referenzmusters als Funktion eines Parameters,
o Vergleichen des Messmusters mit dem Referenzmuster,
o Variieren des Parameters bis das Referenzmuster die maximale bzw. maximal erreichbare Ähnlichkeit zum Messmuster zeigt,
o Festlegen des Parameters als besten Schätzer und Bestimmen des Drehwinkels aus der Parameterschätzung.

Der Parameter stellt beispielsweise einen Referenz-Drehwinkel, der den Drehwinkel respektive die relative rotatorische Lage von Kreisscheibe und Detektor beschreibt, dar. Aus der Parameterschätzung erhält man den Wert für den Referenz-Drehwinkel, der mit der grössten Wahrscheinlichkeit das Messmuster hervorbringen würde.

In einer weiteren Ausführungsform der Erfindung wird das Messmuster anhand einer, auf einem integralen Vergleich des Messmusters mit dem parametrisierten elektronischen Referenzmuster beruhenden, mathematischen Korrelationsmethode ausgewertet. Der Parameter stellt einen Korrelationsfaktor, der ein Mass für die Übereinstimmung von Mess- und Referenzmuster ist, dar. Im Rahmen der Korrelation wird der Parameter solange variiert, bis eine vorgegebene Korrelationsbedingung - z.B. ein maximaler oder minimaler Korrelationswert - erreicht ist.

Beispielsweise wird für eine solche Korrelationsbildung das Messmuster als Faltung der Intensitätsfunktion c des Bildes, der optischen Unschärfefunktion b des Schattenwurfs und der elektrischen Signalantwort d eines Detektor-Pixels betrachtet: Q = c * b * d, wobei * der Faltungsoperator ist. Da die Intensitätsfunktion c auch den zu bestimmenden Drehwinkel α beschreibt, ist die Messmuster-Funktion Q auch eine Funktion des zu bestimmenden Drehwinkels α : Q = Q(α).

Das Referenzmuster wird als das Messmuster beschreibende Musterfunktion eines Referenz-Drehwinkels α', der den Drehwinkel beschreibt, erzeugt: P = P(α'). Zur Bestimmung der Positionsinformation des Messmusters werden die Messsignale mit den synthetischen ReferenzSignalen verglichen, wobei als Gütemass die Korrelationsfunktion p = Q(α) 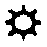 P(α') verwendet wird, mit 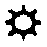 als Korrelationsoperator.

Beim Vergleichen der Signale wird der Referenz-Drehwinkel α' mathematisch variiert, bis p ein Maximum erreicht - was eine maximale Übereinstimmung der Signale beschreibt. Der Referenz-Drehwinkel α' bei ρ = max. gibt dann den besten Schätzwert des gesuchten Drehwinkels α an. Mit einem derartigen Korrelationsverfahren sind hohe Auflösungswerte - beispielsweise von Pixel/100 - erreichbar.

Zum Vergleichen des Messmusters mit dem Referenzmuster kann auch eine Moire-ähnliche Methode angewandt werden. Das Referenzmuster wird - z.B. modelltheoretisch - als stationäres, mit zur Frequenz eines hochfrequenten Gitters als Codierung leicht verschiedener Hochfrequenz versehenes Gitter bereitgestellt, sodass eine digitale Überlagerung der Gitter zu den bekannten Moire-Strukturen führt. Die Positionsinformation des Messmusters wird anhand eines integralen Vergleichs des Mess- mit dem Referenzmuster ausgewertet. Als Gitterstrukturen sind beispielsweise radiale Gitterstrukturen, wie ein Siemensstern, oder Strukturen wie radiale Fresnelzonengitter - radialer "Chirp" - geeignet.

Je nach Ausführung der Codierung der Kreisscheibe kann das erfindungsgemässe Verfahren zusätzlich weitere Positionsinformationen verwenden. Weist die Codierung einen als Absolutcode ausgeführten Teilcode auf, so kann aus dem Bild des Absolutcodes ein grober Absolutwert für den Drehwinkel bestimmt werden, welcher Grobwert als Anfangswert des Vergleichsverfahrens verwendbar ist. Weiters kann das Verfahren auch die Bildinformationen gewichten, insbesondere radial gewichten. So werden z.B. am äusseren Rand der Kreisscheibe aufgebrachte Codestrukturen, die bezüglich der Information über die relative rotatorische Lage von Kreisscheibe und Detektor besser auswertbar sind als innere Strukturen, im erfindungsgemässen Verfahren für die Auswertung des Drehwinkels stärker gewichtet als weiter innen - zur Drehachse hin - liegende Codestrukturen.

Der erfindungsgemässe Winkelsensor und das erfindungsgemässe Verfahren werden nachfolgend anhand von in den Zeichnungen schematisch dargestellten Ausführungsbeispielen rein beispielhaft näher beschrieben oder erläutert. Im Einzelnen zeigen:
- Fig. 1: zwei Teilfiguren mit Ausführungsformen eines optoelektronischen Winkelsensors;
- Fig. 2: eine Teilfigur mit einer Ausführungsform einer codierter Kreisscheibe eines Winkelsensors und eine Teilfigur zur Erläuterung des Korrelationsverfahrens;
- Fig. 3: zwei Teilfiguren mit weiteren Ausführungsformen codierter Kreisscheiben eines Winkelsensors und eine dritte Teilfigur zur Erläuterung des Korrelationsverfahrens;
- Fig. 4: vier Teilfiguren zur Erläuterung eines erfindungsgemässen Verfahrens zur Bestimmung eines Drehwinkels;
- Fig. 5: in drei Teilfiguren Anordnungen von Kreisscheibe und Detektor;
- Fig. 6: vier Teilfiguren mit Einrichtungen eines optoelektronischen Winkelsensors zum Erzeugen des Bildes.

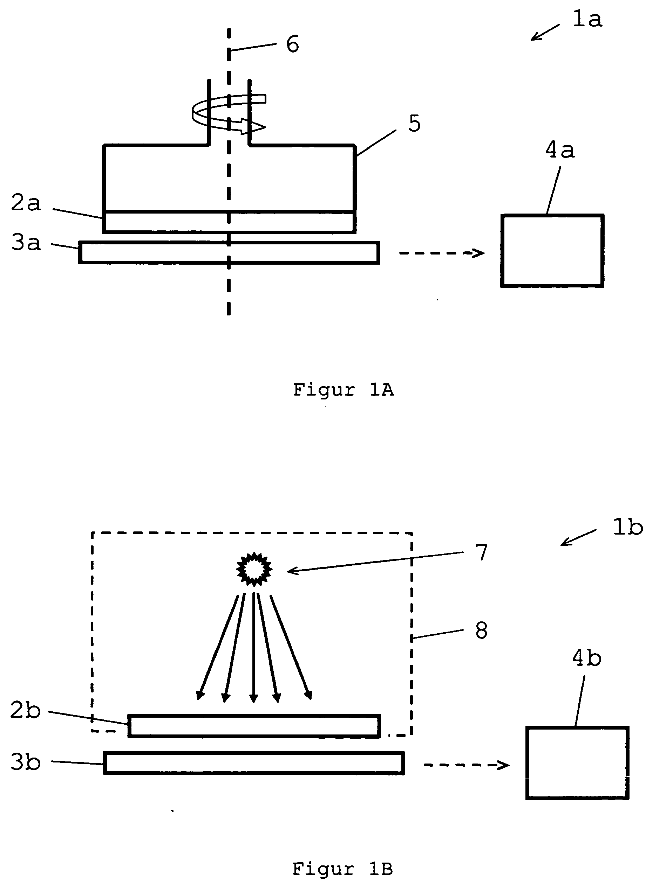

In Figur 1A ist ein Aufbau eines optoelektronischen Winkelsensors 1a zur Bestimmung eines Drehwinkels um eine Achse skizziert. Eine um die Achse 6 - Drehachse - angeordnete Kreisscheibe 2a als Codeträger ist in eine Einfassung 5 eingesetzt. Beispielsweise ist die Einfassung 5 mit einem Werkzeug oder einem Motor verbunden. Die Einfassung 5 kann auch in die Alhidade eines Theodoliten eingesetzt sein und sich mit dieser drehen. Die Kreisscheibe 2a dreht sich - wie durch den Pfeil angedeutet - gegenüber einem elektrooptischen Detektor 3a, welcher relativ zur Kreisscheibe 2a derart angeordnet ist, dass auf der dem Detektor 3a zugewandten Fläche der Kreisscheibe 2a aufgebrachte Codeelemente auf dem Detektor 3a abgebildet werden. Kreisscheibe 2a und Detektor 3a sind hier koaxial zentriert angeordnet. Die Abbildung - respektive die winkelproportionalen Messsignale - wird in einem Elektronikbauteil 4a als Speicher- und Auswertekomponente weiterverarbeitet. Erfindungsgemäss ist im Elektronikbauteil 4a ein durch einen Parameter parametrisch variierbares elektronisches Referenzmuster abgespeichert, das mit den Messsignalen verglichen wird. Anhand einer Parameterschätzung wird der Drehwinkel um die Achse 6 bestimmt.

Figur 1B zeigt einen Winkelsensor 1b mit einer relativ zu einem Detektor 3b drehbaren Kreisscheibe 2b und einer Strahlungsquelle 7 einer Abbildungseinrichtung. Der Detektor 3b ist im Wesentlichen gleich gross dimensioniert wie die Kreisscheibe 2b. Mittels der von der Strahlungsquelle 7 ausgesandten optischen Strahlung wird die Codierung der Kreisscheibe 2b vollständig auf dem Detektor 3b abgebildet. Strahlungsquelle 7 und Kreisscheibe 2b sind in einem gemeinsamen - durch gestrichelte Linien dargestellten - Gehäuse 8 angeordnet, sodass sich Strahlungsquelle 7 und Kreisscheibe 2b gemeinsam drehen. Die Strahlungsquelle 7 kann auch ausserhalb der drehenden Teile angeordnet werden und feststehend sein. Alternativ kann der Detektor 3b als drehende Komponente ausgebildet und angeordnet sein. Die Kreisscheibe 2b ist aus optisch transparentem Material, wie Glas oder Kunststoff, ausgebildet und weist - nicht dargestellte - für die Strahlung durchlässige und undurchlässige Bereiche als Codierung auf. Mittels der auf die Kreisscheibe 2b auftreffenden und teilweise durchtretenden Strahlung wird ein gesamthaftes Bild der Codierung auf dem Detektor 3b erzeugt. Wie in Figur 1A wird die Abbildung in einer Speicher- und Auswertekomponente 4b, z.B. einem FPGA (field-programmable gate array), mit einem elektronischen Referenzmuster verglichen und im Rahmen des Vergleichsverfahrens der Drehwinkel ermittelt.

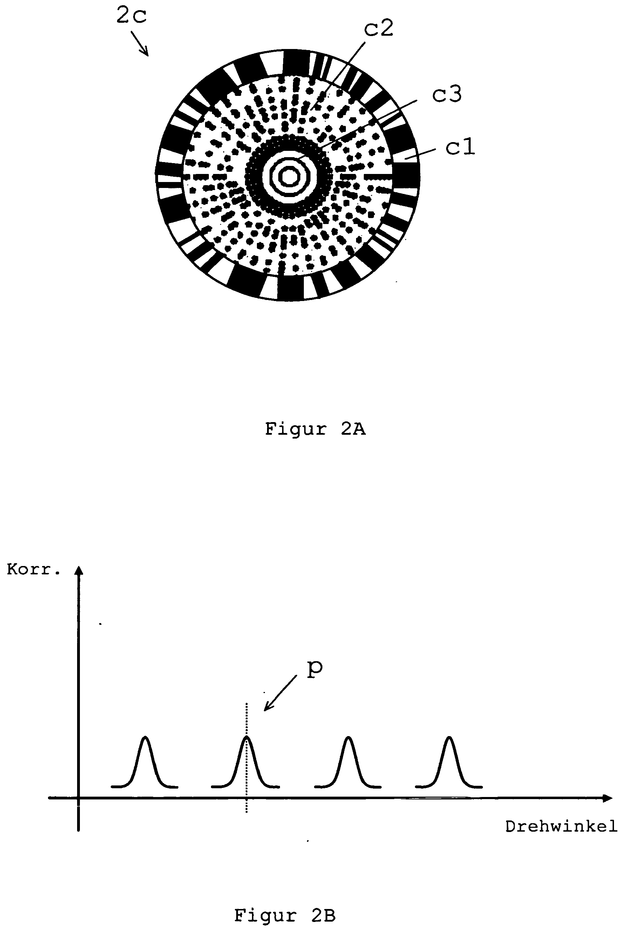

In Figur 2A ist eine Ausführungsform einer Kreisscheibe 2c eines erfindungsgemässen optoelektronischen Winkelsensors dargestellt. Die Kreisscheibe 2c trägt eine weitgehend vollflächige Codierung, die hier einen ersten, zweiten und dritten Teilcode aufweist. Der erste Teilcode ist ein im äusseren Bereich der Kreisscheibe 2c aufgebrachter azimutal erstreckter binärer Absolutcode c1. Der zweite Teilcode ist als polar verteilter Punktcode c2 ausgeführt. Die konzentrischen Kreise c3 um das Kreisscheibenzentrum bilden den dritten Teilcode. Anhand einer entsprechenden Erfassung des dritten Codes sind Exzentrizitätsfehler bestimmbar. Die gezeigte Kreisscheibe 2c ermöglicht die Bestimmung des Drehwinkels anhand folgender Schritte: Die Codierung wird so auf dem Detektor abgebildet, dass der erste, zweite und dritte Teilcode weitgehend vollständig - z.B. zu 95% - erfasst werden. Aus dem Bild des Absolutcodes c1 kann ein Grobwert des Drehwinkels ermittelt werden. Die das Bild des Punktcodes c2 repräsentierenden Messsignale werden anhand einer Korrelationsbildung algorithmisch mit den idealisierten Daten eines das Referenzmuster bildenden Abbildungsmodells des Punktcodes c2 verglichen. Der Punktcode c2 auf der Kreisscheibe 2c ist ein mehrdeutiger Code, liefert also keine eindeutige Positionsinformation. Da der Punktcode c2 nicht eindeutig ist, entstehen bei der Korrelation der idealisierten Daten mit den Messsignalen mehrere Korrelationspeaks, wie in der Darstellung der Korrelation der Daten in Abhängigkeit des Drehwinkels der Figur 2B gezeigt. Nun wird anhand des aus der Auswertung des Absolutcodes c1 bestimmten Grobwinkelwerts das relevante Winkelintervall und der korrekte Korrelationspeak p ausgewählt.

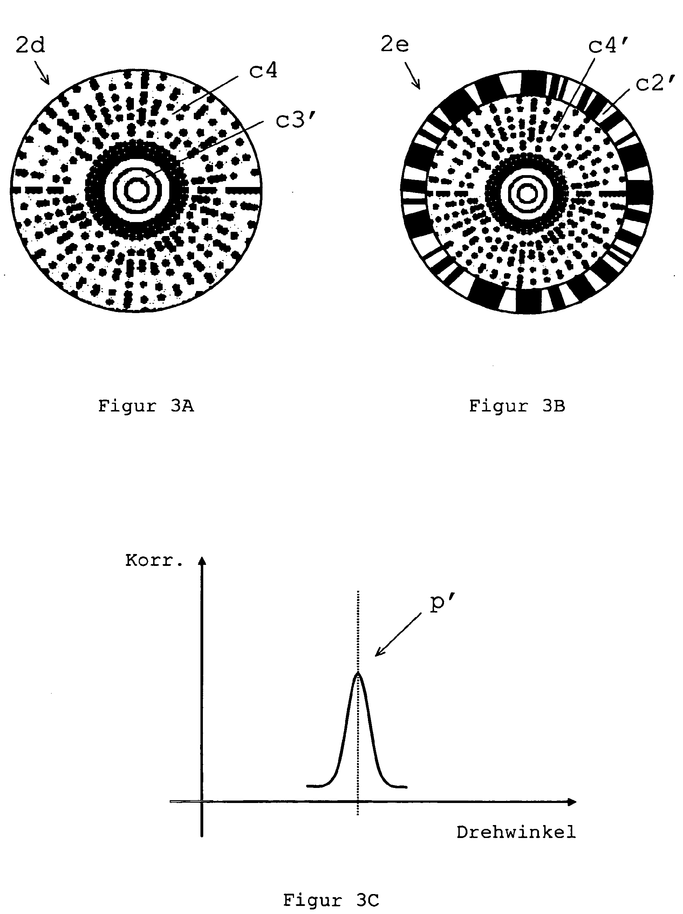

Die Figur 3A zeigt eine Kreisscheibe 2d mit zwei Teilcodes als Codierung, wobei der Drehwinkel grundsätzlich aus dem Bild und der Auswertung des polar verteilten Punktcodes c4 als Teilcode bestimmbar ist. Der dargestellte weitere Teilcode - der azimutal erstreckte Radialcode c3' - ist zur Eliminierung von Exzentrizitäts- und Achstaumelfehlern vorgesehen. Der in Umfangs- und Radialrichtung erstreckte, polar verteilte Punktcode c4 trägt eine eindeutige Positionsinformation. Bei einer mathematischen Korrelation des Bildes - des Messmusters - mit dem elektronischen Referenzmuster entsteht daher ein einzelner scharfer Korrelationspeak p' beim gesuchten Drehwinkel, wie in Figur 3C dargestellt. Der gesuchte Drehwinkel wird als der dem maximalen Korrelationswert zugeordnete Drehwinkel bestimmt.

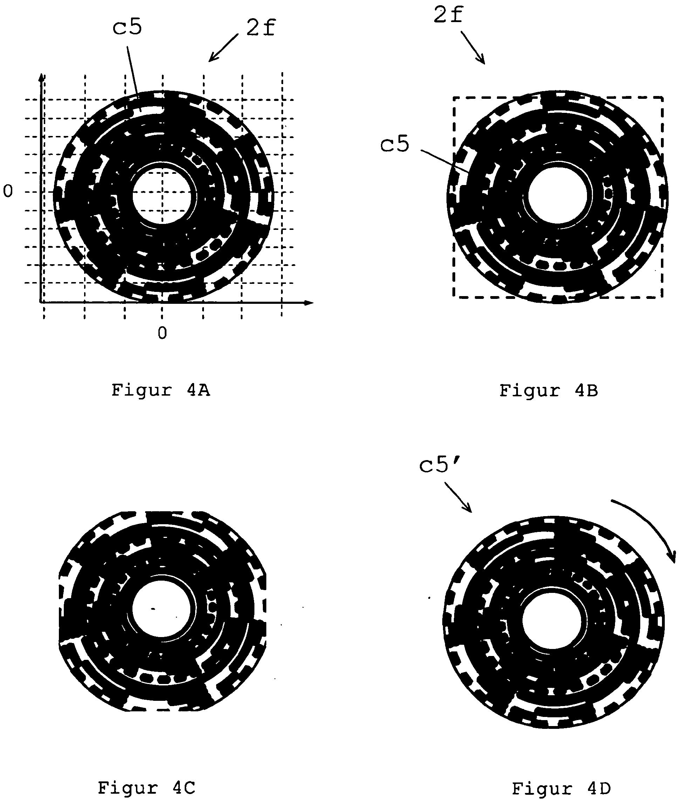

Die Kreisscheibe 2e in Figur 3B weist eine zur Codierung aus Figur 2B ähnliche vollflächige Codierung auf. Im Gegensatz zu Figur 2B ist der Punktcode c4' der mittleren Codespur jedoch, wie der Punktcode aus Figur 3A, eindeutig. Der Absolutcode c2' der äusseren Codespur ist vorgesehen, um einen Anfangswert für die mittels einer Software durchgeführte Korrelationsbildung des Punktcodes c4' mit einem Referenzmuster zu erhalten. Damit wird die Korrelationsbildung beschleunigt und die erforderliche Rechnerleistung reduziert. So kann ein aus dem Absolutcode c2' bestimmter Winkelwert als Anfangswert in eine das Referenzmuster darstellende winkelabhängige Funktion eingesetzt und variiert werden, bis die Korrelation ein Maximum oder einen vorgegebenen Korrelationswert erreicht. In Figur 4A ist eine absolut codierte Kreisscheibe 2f eines Winkelsensors mit einem, im Wesentlichen über die gesamte Scheibenfläche aufgebrachten, Binärcode c5 in einem Koordinatensystem in der 0°-Winkelstellung dargestellt. Der Binärcode c5 ist aus lichtdurchlässigen und lichtundurchlässigen Code-Elementen gebildet und verändert sich sowohl in azimutaler als auch radialer Richtung winkelabhängig. Die Darstellung des Binärcodes c5 ist rein beispielhaft. Die Kreisscheibe 2f ist miniaturisiert. Indem der Binärcode c5 im Wesentlichen vollflächig aufgebracht ist, ist dennoch eine hohe Anzahl von Übergängen - und damit eine Codierung mit hohem Informationsgehalt - realisierbar. Da die Kreisscheibe 2f miniaturisiert ist, ist weiters eine - wirtschaftliche - Ausführungsform eines Winkelsensors mit einem Detektor, dessen Fläche in etwa zur Fläche der Kreisscheibe korrespondiert, verwirklichbar.

Figur 4B zeigt die Kreisscheibe 2f nach einer Drehung um etwa 45°. In Figur 4B ist auch die Position eines flächigen photosensitiven Detektors des Winkelsensors mit gestrichelten Linien eingezeichnet. Anhand der Ausbildung der Kreisscheibe und des Detektors mit in etwa denselben Abmessungen ist auf dem Detektor ein weitgehend vollständiges auswertbares Bild der Codierung erzeugbar. Aufgrund der Aufbringung auf eine miniaturisierte Kreisscheibe 2f sind auch die Strukturen der Codierung verkleinert und verfeinert. Dem wird einerseits durch die vollflächige Codierung - hohe Anzahl von Übergängen - Rechnung getragen, welche die Unschärfe in der Positionsrespektive Winkelbestimmung verringern. Weiters wird zur Winkelbestimmung ein Auswerteverfahren verwendet, welches es ermöglicht, die abgebildeten Codestrukturen auszuwerten. Das Auswerteverfahren umfasst hier die Bereitstellung eines elektronischen Referenzmusters, welches eine statistische Verteilung einer Zufallsvariable - hier des Drehwinkels - beschreibt - die Beschreibung erfolgt anhand einer Schätzfunktion. Die Messfunktion - das Bild - und die Schätzfunktion werden miteinander verglichen, wobei die Zufallsvariable - der Drehwinkel - systematisch verändert wird. Der Vergleich respektive die Schätzung liefert einen besten Schätzer für den Drehwinkel.

Die Figuren 4C und 4D dienen - unter Bezugnahme auf die Figuren 4a und 4B - einer anschaulichen Erläuterung verfahrensseitiger Schritte. Figur 4C stellt den Bereich des Binärcodes c5 dar, der als Bild auf dem Detektor abgebildet wird. Figur 4D zeigt eine bildhafte, rein der Anschaulichkeit dienende, Darstellung eines Referenzmusters, welches den Binärcode c5 dupliziert. Das Referenzmuster ist als Nachbildung c5' des Binärcodes c5 an der 0°-Position - Referenzposition - aus Figur 4A gezeichnet. Die eigentliche Nachbildung erfolgt mittels einer entsprechenden Software. Zum Auswerten der Bildinformation erfolgt ein Vergleich von Bild und Referenzmuster und Verändern eines Parameterwerts des Referenzmusters - im Bild von Figur 4D durch einen Pfeil als Verdrehung angedeutet - bis die höchste Übereinstimmung zwischen Bild und Referenzmuster gefunden ist. Der entsprechende Parameterwert wird zur Bestimmung des gesuchten Drehwinkelwerts verwendet.

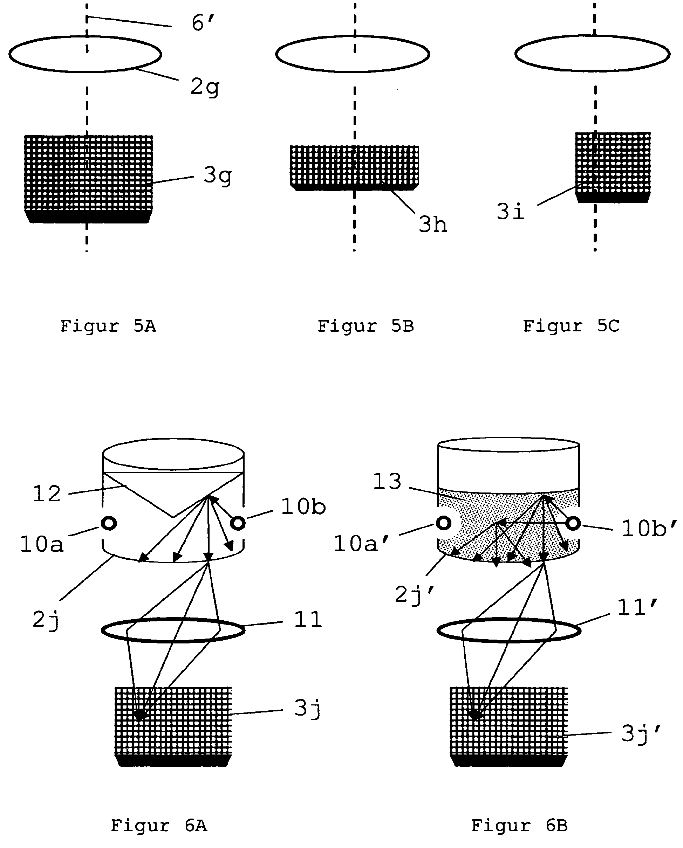

In den Figuren 5A-5C dargestellt sind jeweils eine Kreisscheibe und ein Detektor mit photosensitiven Detektorelementen eines Winkelsensors in teilweiser Draufsicht. In Figur 5A entspricht die detektierende Fläche des Detektors 3g in etwa der Fläche der Kreisscheibe 2g, sodass im Wesentlichen die gesamte auf die Kreisscheibe 2g aufgebrachte Codierung in einfacher Art und Weise auf den Detektor 3g abgebildet werden kann. Der Detektor 2g ist z.B. ein 1000 x 1000 CMOS-Pixelsensor. Die Drehachse 6' des Winkelsensors fällt mit den geometrischen Achsen von Kreisscheibe 2g und Detektor 3g zusammen - Kreisscheibe 2g und Detektor 3g sind koaxial zentriert angeordnet. Dies ist auch in Figur 5B der Fall. Hier ist der als CCD-Flächensensor 3h ausgebildete Detektor weniger gross, sodass zur weitgehend vollständigen Erfassung der Codierung ein spezielles Beleuchtungskonzept erforderlich ist. Figur 5C zeigt eine Ausführungsform mit einem Detektor 3i, dessen Zentrum nicht mit der Drehachse des Winkelsensors zusammenfällt. In allen Ausführungsformen 5A-5C sind die Einrichtung zur Bilderzeugung und die Speicher- und Auswertekomponente des Winkelsensors nicht gezeigt. Die Einrichtung zum Erzeugen des Bildes wird so ausgebildet und angeordnet, dass ein möglichst grosser, insbesondere der gesamte, Bereich der Codierung der Kreisscheibe auf den Detektorelementen abgebildet wird. Das Bild entspricht elektrischen Messsignalen, die beispielsweise pixelweise mit aus einem Abbildungsmodell der Codierung oder des Bildes abgeleiteten idealen Daten oder - wie vorgängig beschrieben - auf alternative Art und Weise mit einem alternativen elektronischen Referenzmuster verglichen werden.

Die Figuren 6A-6D sind Darstellungen eines Winkelsensors mit unterschiedlichen Einrichtungen zum Erzeugen eines auswertbaren Bildes der Kreisscheiben-Codierung. Die Abbildung der Codierung kann grundsätzlich von aussen oder innen in Auf- oder Durchlicht, oder durch einen selbstleuchtenden Code erfolgen. Dargestellt ist nur die Beleuchtung von aussen.

In den Figuren 6A und 6B erfolgt die Beleuchtung in Durchlicht: Die Strahlung zweier Photodioden 10a und 10b bzw. 10a' und 10b' wird auf die Kreisscheibe 2j bzw. 2j' projiziert und anhand einer hier als Linse 11 bzw. 11' beispielhaft dargestellten Optikeinheit auf den Detektor 3j bzw. 3j' abgebildet. Um eine möglichst homogene Beleuchtung der Kreisscheibe 2j bzw. 2j' zu erreichen, wird die Strahlung der Photodioden 10a und 10b bzw. 10a' und 10b' aufgeweitet, in Figur 6A mittels eines streuenden Umlenkspiegels 12 und in Figur 6B durch ein streuendes Medium 13.

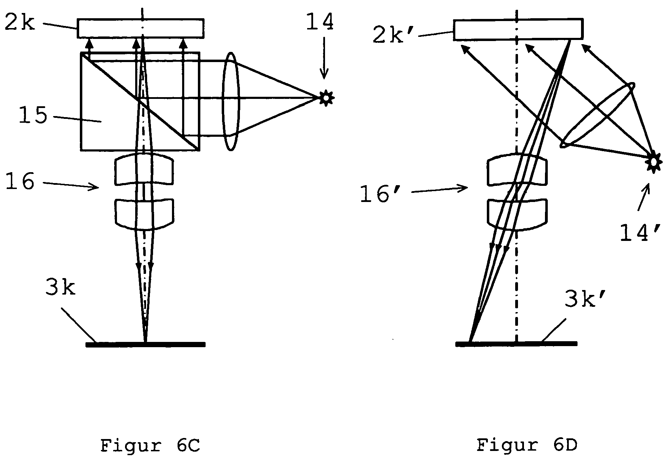

Die Figuren 6C und 6D zeigen die Beleuchtung der Kreisscheibe in Auflicht. Die von einer Strahlungsquelle 14 ausgesandte Strahlung wird in Figur 6C über einen Strahlteiler 15 auf die Kreisscheibe 2k gelenkt. Die an der Kreisscheibe 2k reflektierte Strahlung gelangt durch den Strahlteiler 15 über eine Abbildungsoptik 16 auf den Detektor 3k. In Figur 6D erfolgt die Beleuchtung unter schrägem Einfall des Lichts der Strahlungsquelle 14' auf die Kreisscheibe 2k'. Das reflektierte Licht wird wiederum über eine Abbildungsoptik 16' auf den Detektor 3k' gelenkt. Die Abbildungsoptik kann jeweils aus Linsen mit konischen und/oder sphärischen und/oder asphärischen Oberflächen gebildet sein.

## Patentansprüche

1. Optoelektronischer Winkelsensor (1a,1b) zum Bestimmen eines Drehwinkels um eine Achse (6) mit
▪ einer um die Achse (6) drehbaren Kreisscheibe (2a,2b,2c,2d,2e,2f,2g,2k) mit einer im Wesentlichen vollflächigen Codierung,
▪ einem flächigen photosensitiven
Detektor (3a,3b,3g,3h, 3i,3j,3k),
wobei die Kreisscheibe (2a,2b,2c,2d,2e,2f,2g,2k) und der Detektor (3a,3b,3g,3h,3i,3j,3k) relativ zueinander bewegbar sind,
▪ einer Einrichtung zum Erzeugen eines auswertbaren Bildes der Codierung auf dem
Detektor (3a,3b,3g,3h,3i,3j,3k) derart, dass das Bild eine Information über die Relativposition von Kreisscheibe (2a,2b,2c,2d,2e,2f,2g, 2k) und
Detektor (3a,3b,3g,3h,3i,3j,3k) beinhaltet, und
▪ einer Speicher- und Auswertekomponente (4a,4b) zum Bestimmen des Drehwinkels,
wobei
die Einrichtung ein weitgehend vollständiges, insbesondere gesamthaftes, Bild der Codierung erzeugt **dadurch gekennzeichnet, dass** die Speicher- und Auswertekomponente (4a,4b)
▪ ein der Codierung zuordenbares parametrisiertes elektronisches, insbesondere modellbasiertes, Referenzmuster bereitstellt und
▪ den Drehwinkel aus Referenzmuster und Bild mittels eines parametervariierenden stochastischen Vergleichsverfahrens bestimmt.

2. Optoelektronischer Winkelsensor (1a,1b) nach Anspruch 1,
**dadurch gekennzeichnet, dass** das Bild wenigstens 50%, insbesondere mehr als 75% und vorzugsweise 100% der Codierung aufweist.

3. Optoelektronischer Winkelsensor (1a,1b) nach Anspruch 1 oder 2, **dadurch gekennzeichnet, dass** die Flächen von Detektor (3a,3b,3g) und Kreisscheibe (2a,2b,2g) in ihrer Dimensionierung aneinander angepasst sind, insbesondere weitgehend deckungsgleich sind.

4. Optoelektronischer Winkelsensor (1a,1b) nach einem der Ansprüche 1 bis 3, **dadurch gekennzeichnet, dass** die Kreisscheibe (2a,2b,2g) und der Detektor (3a,3b,3g,3h) koaxial zentriert angeordnet sind.

5. Optoelektronischer Winkelsensor (1a,1b) nach einem der vorangehenden Ansprüche, **dadurch gekennzeichnet, dass** das Referenzmuster mit einem Referenz-Drehwinkel, der die rotatorische Lage des Referenzmusters zum Bild beschreibt, parametrisiert ist.

6. Optoelektronischer Winkelsensor (1a,1b) nach einem der vorangehenden Ansprüche, **dadurch gekennzeichnet, dass** das Referenzmuster auf
▪ einem mathematisches Modell des Bildes oder der Codierung, oder
▪ einer reproduzierenden Duplikation oder Simulation des Bildes oder der Codierung
basiert.

7. Optoelektronischer Winkelsensor (1a,1b) nach einem der vorangehenden Ansprüche, **dadurch gekennzeichnet, dass** das Vergleichsverfahren ein
▪ Schätzverfahren, insbesondere Maximum-Likelihood-Verfahren oder Verfahren der kleinsten Fehlerquadrate, oder
▪ mathematisches Korrelationsverfahren verwendet.

8. Optoelektronischer Winkelsensor (1a,1b) nach einem der vorangehenden Ansprüche, **dadurch gekennzeichnet, dass** das Vergleichsverfahren eine radiale Gewichtung von Codierungsbestandteilen aufweist.

9. Optoelektronischer Winkelsensor (1a,1b) nach einem der vorangehenden Ansprüche, **dadurch gekennzeichnet, dass** die Codierung einen
▪ sich sowohl in azimutaler als auch radialer Richtung winkelabhängig verändernden Code (c5) und/oder
▪ Inkrementalcode, beispielsweise Siemensstern, und/oder
▪ polar verteilten Punktcode (c2,c4) und/oder
▪ Absolutcode (c2') und/oder
▪ azimutal erstreckten Radialcode (c3')
als Teilcode aufweist.

10. Verfahren zur Bestimmung eines Drehwinkels um eine Achse (6) mit
▪ einer um die Achse (6) drehbaren
Kreisscheibe (2a,2b,2c, 2d,2e,2f,2g,2k) mit einer im Wesentlichen vollflächigen Codierung und
▪ einem flächigen photosensitiven
Detektor (3a,3b,3g,3h,3i, 3j,3k),
wobei die Kreisscheibe (2a,2b,2c,2d,2e,2f,2g,2k) und der Detektor (3a,3b,3g,3h,3i,3j,3k) relativ zueinander bewegbar sind,
mit einem
▪ Erzeugen eines weitgehend vollständigen, insbesondere gesamthaften, auswertbaren Bildes der Codierung auf dem Detektor (3a,3b,3g,3h,3i,3j,3k) derart, dass das Bild eine Information über die Relativposition von Kreisscheibe (2a,2b,2c,2d,2e,2f,2g,2k) und Detektor (3a, 3b,3g,3h,3i,3j,3k) beinhaltet,
▪ Bereitstellen eines der Codierung zuordenbaren, durch mindestens einen Parameter parametrisch variierbaren elektronischen Referenzmusters,
▪ Ableiten des Drehwinkels durch Vergleichen von Referenzmuster und Bild und durch Variieren des Parameters.

11. Verfahren nach Anspruch 10, **dadurch gekennzeichnet, dass** das Referenzmuster
▪ als mathematisches Modell des Bildes,
▪ als mathematisches Modell der Codierung,
▪ als algorithmische Beschreibung des Bildes,
▪ als algorithmische Beschreibung der Codierung,
▪ als das Bild reproduzierende Simulation oder Duplikation, oder
▪ als die Codierung reproduzierende Simulation oder Duplikation
bereitgestellt wird.

12. Verfahren nach Anspruch 10 oder 11, **dadurch gekennzeichnet, dass** beim Vergleichen das Referenzmuster und das Bild digital überlagert werden.

13. Verfahren nach einem der Ansprüche 10 bis 12, **dadurch gekennzeichnet, dass** beim Ableiten ein
▪ Schätzverfahren, insbesondere Maximum-Likelihood-Verfahren oder Verfahren der kleinsten Fehlerquadrate, oder
▪ mathematisches Korrelationsverfahren
angewandt wird.

14. Verfahren nach einem der Ansprüche 10 bis 13, **dadurch gekennzeichnet, dass**
▪ als der Parameter ein Referenz-Drehwinkel, der die rotatorische Lage des Referenzmusters zum Abbild beschreibt, gewählt wird,
▪ eine Parameterschätzung nach dem Maximum-Likelihood-Verfahren durchgeführt wird und
▪ der Drehwinkel als der geschätzte Parameter bestimmt wird.

## Claims

1. Optoelectronic angle sensor (1a, 1b) for determining a rotational angle about an axis (6), comprising
▪ a circular disc (2a, 2b, 2c, 2d, 2e, 2f, 2g, 2k) rotatable about the axis (6) and having a coding substantially over the whole area,
▪ a planar photosensitive detector (3a, 3b, 3g, 3h, 3i, 3j, 3k),
the circular disc (2a, 2b, 2c, 2d, 2e, 2f, 2g, 2k) and the detector (3a, 3b, 3g, 3h, 3i, 3j, 3k) being moveable relative to one another,
▪ device for producing an evaluable image of the coding on the detector (3a, 3b, 3g, 3h, 3i, 3j, 3k) in such a way that the image comprises information about the relative position of circular disc (2a, 2b, 2c, 2d, 2e, 2f, 2g, 2k) and detector (3a, 3b, 3g, 3h, 3i, 3j, 3k), and
▪ a memory and evaluation component (4a, 4b) for determining the rotational angle,
wherein
the device produces a substantially complete, in particular entire, image of the coding and **characterized in that**
the memory and evaluation component (4a, 4b)
▪ provides a configured electronic, in particular model-based, reference pattern which can be coordinated with the coding and
▪ determines the rotational angle from reference pattern and image by means of a parameter-varying stochastic comparison method.

2. Optoelectronic angle sensor (1a, 1b) according to Claim 1, **characterized in that** the image has at least 50%, in particular more than 75% and preferably 100% of the coding.

3. Optoelectronic angle sensor (1a, 1b) according to Claim 1 or 2, **characterized in that** the areas of detector (3a, 3b, 3g) and circular disc (2a, 2b, 2g) are adapted to one another in their dimensioning, in particular substantially coincide.

4. Optoelectronic angle sensor (1a, 1b) according to any of Claims 1 to 3, **characterized in that** the circular disc (2a, 2b, 2g) and the detector (3a, 3b, 3g, 3h) are arranged so as to be coaxially centred.

5. Optoelectronic angle sensor (1a, 1b) according to any of the preceding claims, **characterized in that** the reference pattern is configured with a reference rotational angle which describes the rotational position of the reference pattern relative to the image.

6. Optoelectronic angle sensor (1a, 1b) according to any of the preceding claims, **characterized in that** the reference pattern is based on
▪ a mathematical model of the image or of the coding or
▪ a reproducing duplication or simulation of the image or of the coding.

7. Optoelectronic angle sensor (1a, 1b) according to any of the preceding claims, **characterized in that** the comparison method uses a
▪ estimation method, in particular maximum likelihood method or least squares method or
▪ mathematical correlation method.

8. Optoelectronic angle sensor (1a, 1b) according to any of the preceding claims, **characterized in that** the comparison method has a radial weighting of coding components.

9. Optoelectronic angle sensor (1a, 1b) according to any of the preceding claims, **characterized in that** the coding has a
▪ code (c5) variable in an angle-dependent manner both in the azimuthal and in the radial direction and/or
▪ incremental code, for example Siemens star, and/or
▪ point code (c2, c4) distributed in a polar manner and/or
▪ absolute code (c2') and/or
▪ azimuthally extending radial code (c3')
as a part-code.

10. Method for determining a rotational angle about an axis (6), comprising
▪ a circular disc (2a, 2b, 2c, 2d, 2e, 2f, 2g, 2k) rotatable about the axis (6) and having a coding substantially over the whole area and
▪ a planar photosensitive detector (3a, 3b, 3g, 3h, 3i, 3j, 3k),
the circular disc (2a, 2b, 2c, 2d, 2e, 2f, 2g, 2k) and the detector (3a, 3b, 3g, 3h, 3i 3j, 3k) being moveable relative to one another,
comprising
▪ production of a substantially complete, in particular entire, evaluable image of the coding on the detector (3a, 3b, 3g, 3h, 3i, 3j, 3k) in a manner such that the image comprises information about the relative position of circular disc (2a, 2b, 2c, 2d, 2e, 2f, 2g, 2k) and detector (3a, 3b, 3g, 3h, 3i, 3j, 3k),
▪ provision of an electronic reference pattern which can be varied in configuration by at least one parameter and can be coordinated with the coding,
▪ derivation of the rotational angle by comparison of reference pattern and image and by variation of the parameter.

11. Method according to Claim 10, **characterized in that** the reference pattern is provided
▪ as a mathematical model of the image,
▪ as a mathematical model of the coding,
▪ as an algorithmic description of the image,
▪ as an algorithmic description of the coding,
▪ as an image-reproducing simulation or duplication or
▪ as a coding-reproducing simulation or duplication.

12. Method according to Claim 10 or 11, **characterized in that** the reference pattern and the image are digitally superposed in the comparison.

13. Method according to any of Claims 10 to 12, **characterized in that** an
▪ estimation method, in particular maximum likelihood method or least squares method, or
▪ mathematical correlation method
is used in the derivation.

14. Method according to any of Claims 10 to 13, **characterized in that**
▪ a reference rotational angle which describes the rotational position of the reference pattern relative to the mapping is chosen as the parameter,
▪ a parameter estimation is carried out by the maximum likelihood method and
▪ the rotational angle is determined as the estimated parameter.

## Revendications

1. Détecteur d'angle optoélectronique (1a, 1b) pour déterminer un angle de rotation autour d'un axe (6) avec
• un disque circulaire (2a, 2b, 2c, 2d, 2e, 2f, 2g, 2k) rotatif autour de l'axe (6) avec un codage substantiellement intégral en surface,
• un détecteur photosensible plat (3a, 3b, 3g, 3h, 3i, 3j, 3k), le disque circulaire (2a, 2b, 2c, 2d, 2e, 2f, 2g, 2k) et le détecteur étant mobiles l'un par rapport à l'autre,
• un dispositif pour générer une image exploitable du codage sur le détecteur (3a, 3b, 3g, 3h, 3i, 3j, 3k) de telle manière que l'image contient une information sur la position relative du disque circulaire (2a, 2b, 2c, 2d, 2e, 2f, 2g, 2k) et du détecteur (3a, 3b, 3g, 3h, 3i, 3j, 3k) et
• une composante de mémorisation et d'évaluation (4a, 4b) pour déterminer l'angle de rotation, cependant que le dispositif génère une image pratiquement complète, en particulier globale du codage,
**caractérisé en ce que** la composante de mémorisation et d'évaluation (4a, 4b) met à disposition
• un motif de référence électronique paramétré qui peut être associé au codage, en particulier basé sur modèle et
• détermine l'angle de rotation à partir du motif de référence et de l'image d'un procédé de comparaison stochastique à paramètres variables.

2. Détecteur d'angle optoélectronique (1a, 1b) selon la revendication 1, **caractérisé en ce que** l'image présente au moins 50%, en particulier plus de 75% et de préférence 100% du codage.

3. Détecteur d'angle optoélectronique (1a, 1b) selon la revendication 1 ou 2, **caractérisé en ce que** les surfaces du détecteur (3a, 3b, 3g) et du disque circulaire (2a, 2b, 2g) sont adaptées l'une à l'autre dans leur dimensionnement, en particulier sont essentiellement coïncident.

4. Détecteur d'angle optoélectronique (1a, 1b) selon l'une des revendications 1 à 3, **caractérisé en ce que** le disque circulaire (2a, 2b, 2g) et le détecteur (3a, 3b, 3g, 3h) sont placées centrées de manière coaxiale.

5. Détecteur d'angle optoélectronique (1a, 1b) selon l'une des revendications précédentes, **caractérisé en ce que** le motif de référence est paramétré avec un angle de rotation de référence qui décrit la position en rotation du motif de référence par rapport à l'image.

6. Détecteur d'angle optoélectronique (1a, 1b) selon l'une des revendications précédentes, **caractérisé en ce que** le motif de référence est basé sur
• un modèle mathématique de l'image ou du codage ou
• une duplication reproductrice ou une simulation de l'image ou du codage.

7. Détecteur d'angle optoélectronique (1a, 1b) selon l'une des revendications précédentes, **caractérisé en ce que** le procédé de comparaison utilise un
• procédé d'estimation, en particulier la méthode de maximum de vraisemblance ou la méthode des moindres carrés ou
• un procédé de corrélation mathématique.

8. Détecteur d'angle optoélectronique (1a, 1b) selon l'une des revendications précédentes, **caractérisé en ce que** le procédé de comparaison présente une pondération radiale de composants du codage.

9. Détecteur d'angle optoélectronique (1a, 1b) selon l'une des revendications précédentes, **caractérisé en ce que** le codage présente
• un code qui varie aussi bien dans le sens azimutal que dans le sens radial en fonction de l'angle (c5) et/ou
• un code incrémentiel, par exemple une mire de Siemens et/ou
• un code à points à répartition polaire (c2, c4) et/ou
• un code absolu (c2') et/ou
• un code radial qui s'étend dans le sens azimutal (c3')
comme code partiel.

10. Procédé pour déterminer un angle de rotation autour d'un axe (6) avec
• un disque circulaire (2a, 2b, 2c, 2d, 2e, 2f, 2g, 2k) rotatif autour de l'axe (6) avec un codage substantiellement intégral en surface,
• un détecteur photosensible plat (3a, 3b, 3g, 3h, 3i, 3j, 3k), le disque circulaire (2a, 2b, 2c, 2d, 2e, 2f, 2g, 2k) et le détecteur étant mobiles l'un par rapport à l'autre,
avec une
• génération d'une image exploitable pratiquement complète, en particulier globale du codage sur le détecteur (3a, 3b, 3g, 3h, 3i, 3j, 3k) de telle manière que l'image contient une information sur la position relative du disque circulaire (2a, 2b, 2c, 2d, 2e, 2f, 2g, 2k) et du détecteur (3a, 3b, 3g, 3h, 3i, 3j, 3k),
• mise à disposition d'un motif de référence électronique qui peut être associé au codage, dont les paramètres varient par au moins un paramètre,
• dérivation de l'angle de rotation par comparaison du motif de référence et de l'image et par variation du paramètre.

11. Procédé selon la revendication 10, **caractérisé en ce que** le motif de référence est mis à disposition
• en tant que modèle mathématique de l'image,
• en tant que modèle mathématique du codage,
• en tant que description algorithmique de l'image,
• en tant que description algorithmique du codage,
• en tant que simulation reproduisant l'image ou que duplication ou
• en tant que simulation reproduisant le codage ou que duplication.

12. Procédé selon la revendication 10 ou 11, **caractérisé en ce que** lors de la comparaison le motif de référence et l'image sont superposés numériquement.

13. Procédé selon l'une des revendications 10 à 12, **caractérisé en ce que** lors de la dérivation on utilise
• un procédé d'estimation, en particulier la méthode de maximum de vraisemblance ou la méthode des moindres carrés ou
• un procédé de corrélation mathématique.

14. Procédé selon l'une des revendications 10 à 13, **caractérisé en ce que**
• on sélectionne comme paramètre un angle de rotation de référence qui décrit la position en rotation du motif de référence par rapport à l'image,
• on exécute une estimation de paramètre selon la méthode de maximum de vraisemblance et
• le on détermine l'angle de rotation comme étant le paramètre estimé.
